# EUROPEAN PATENT APPLICATION

(11) **EP 2 259 435 A2**
(43) Date of publication of application: **08.12.2010**
(21) Application number: 09725628.3
(22) Date of filing: 27.03.2009
(51) Int. Cl.: H04B 1/38

(54) **PERSONAL DIGITAL ASSISTANT**

(30) Priority: 27.03.2008 KR 20080028167
(71) Applicant: Shell-line, Dalseo-gu Daegu 704-330 (KR)
(72) Inventor: LEE, Sang-Ho, Daegu 704-130 (KR); KIM, Byung Han, Chilgok-gun Gyeongsangbuk-do 718-701 (KR)
(74) Representative: Rupprecht, Kay
(86) International application number: PCT/KR2009/001572
(87) International publication number: WO 2009/120037

(57) **Abstract**

A personal portable device that can simplify a structure and provide convenience in use is disclosed. A personal portable device comprising a main body portion including a display portion, a first cover portion coupled to the main body portion such that it is moved to an overlap position with the main body portion and an extension position to the outside of the main body portion, and a second cover portion coupled to the main body portion such that it is moved to an overlap position with the main body portion and an extension position to the outside of the main body portion, the personal portable device comprising: a hinge unit having one side connected to the first cover portion and the other side connected to the second cover portion, when any one of the first cover portion and the second cover portion is moved with respect to the main body portion, moving the other one together with the one.

## Description

### TECHNICAL FIELD

The present invention relates to a personal portable device, and more particularly, to a personal portable device that can simplify a structure and provide convenience in use.

### BACKGROUND ART

Generally, a personal portable device has been widely used owing to convenience that everyone can easily carry it and freely use it everywhere.

Such a personal portable device has been initially used for wireless voice communication. However, as the personal portable device has covered various function fields, it has been developed to have various additional functions such as a game function together with a basic voice communication function.

The personal portable device can be classified into a bar-type personal portable device, a folder-type personal portable device, and a sliding-type personal portable device in accordance with its appearance and driving mode.

In the mean time, many studies of a personal portable device having various structures and modes have been recently made to satisfy consumers' various needs.

### DETAILED DESCRIPTION OF THE INVENTION

### TECHNICAL PROBLEMS

Accordingly, the present invention is directed to a personal portable device that substantially obviates one or more problems due to limitations and disadvantages of the related art.

An object of the present invention is to provide a personal portable device that can save the manufacturing cost and improve workability and productivity by simplifying a structure and an assembly process.

Another object of the present invention is to provide a personal portable device that can provide convenience in input manipulation of various signals related to various additional functions such as game functions.

Other object of the present invention is to provide a personal portable device that can obtain good-looking appearance without deterioration in natural design characteristics.

### TECHNICAL SOLUTIONS

To achieve these objects and other advantages and in accordance with the purpose of the invention, as embodied and broadly described herein, according to one exemplary aspect of the present invention a personal portable device comprising a main body portion including a display portion, a first cover portion coupled to the main body portion such that it is moved to an overlap position with the main body portion and an extension position to the outside of the main body portion, and a second cover portion coupled to the main body portion such that it is moved to an overlap position with the main body portion and an extension position to the outside of the main body portion, the personal portable device comprising: a hinge unit having one side connected to the first cover portion and the other side connected to the second cover portion, when any one of the first cover portion and the second cover portion is moved with respect to the main body portion, moving the other one together with the one.

A structure and a shape of the main body part can be varied in various manners depending on requirements and design options. For example, the main body part includes a display portion. The first cover part and the second cover part may be arranged at both sides of the display portion by interposing the display portion therebetween. When the first cover part and the second cover part are moved to the extension position to the outside of the main body part, a key pad is provided on an exposed surface exposed on the main body part.

Also, the first cover part and the second cover part may be arranged on one surface or different surfaces of the main body part. For example, the first cover part and the second cover part may be arranged on the main body part. As the case may be, any one of the first cover part and the second cover part may be arranged on the main body part and the other one may be arranged on the bottom of the main body part.

Movement of the first cover part and the second cover part to the overlap position or the extension position with respect to the main body part may be implemented in various manners depending on requirements and design options. For example, the first cover part and the second cover part may be slid with respect to the main body part to move to the overlap position or the extension position. As the case may be, the first cover part and the second cover part may be rotated with respect to the main body part to move to the overlap position or the extension position.

A position of the first cover part and the second cover part may be varied in various manners depending on requirements and design options. For example, the first cover part and the second cover part may be provided at both ends of the main body part along a longitudinal direction of the main body part by interposing the display portion therebetween. The first cover part and the second cover part provided at both ends of the main body part may be approached to each other and spaced apart from each other along the longitudinal direction of the main body part.

As the first cover part and the second cover part are moved to the overlap position or the extension position, conventional additional units or a key pad that includes a key or button for inputting information may be provided on an upper exposed surface of the main body part exposed to the outside.

A structure and a mode of the hinge unit may be varied in various manners depending on requirements and design options. For example, the hinge unit includes a first guide frame slidably arranged on the main body part and coupled to the first cover part, a second guide frame slidably arranged on the main body part and coupled to the second cover part, a disc member rotatably coupled to the main body part such that it is arranged between the first guide frame and the second guide frame, a first link member having one end connected to the disc member and the other end connected to the first guide frame, and a second link member having one end connected to the disc member and the other end connected to the second guide frame. As the case may be, the first and second link members may directly be connected to their corresponding cover parts without through the first and second guide frames.

Preferably, the hinge unit further includes a base frame mounted on the main body part. The first and second guide frames, the disc member, and the first and second link members may be arranged on the base frame and modularized. As the case may be, the parts constituting the hinge unit excluding the base frame may be arranged and assembled separately on the main body part.

Also, the hinge unit includes slide guides formed at both ends of the first guide frame and the second guide frame in a single body to partially receive a side end of the base frame.

The hinge unit further includes at least one elastic member that elastically supports rotation of the disc member with respect to the main body part. For example, the elastic member has one end pivot-rotatably connected to the base frame and the other end pivot-rotatably connected to the disc member. As the case may be, the one end of the elastic member may pivot-rotatably be connected to the base frame, and the other end of the elastic member may pivot-rotatably be connected to the first guide frame and/or the second guide frame. Alternatively, the other end of the elastic member may be connected to the link member or other member. A conventional torsion spring may be used as the elastic member. Various spring members can be used depending on requirements and design options.

A guide slot may be formed in the base frame at a predetermined length along a rotation direction of the disc member such that elastic rotation of the disc member through the elastic member may be made more stably. The hinge unit may include a coupling pin that pivot-rotatably couples the one end of the elastic member to the disc member and is received in the guide slot to move along the guide slot.

In another aspect of the present invention, a personal portable device comprises a main body part; a first cover part coupled to the main body part such that it is moved to an overlap position with the main body part and an extension position to the outside of the main body part; a second cover part coupled to the main body part such that it is moved to the overlap position with the main body part and the extension position to the outside of the main body part; a hinge unit including a first guide frame slidably arranged on the main body part and coupled to the first cover part, a second guide frame slidably arranged on the main body part and coupled to the second cover part, a disc member rotatably coupled to the main body part such that it is arranged between the first guide frame and the second guide frame, the disc member being surrounded with a tooth profile, a first engagement member having a first rack gear engaged with the tooth profile, coupled to the first guide frame, and a second engagement member having a second rack gear engaged with the tooth profile, coupled to the second guide frame, wherein when any one of the first cover part and the second cover part is moved with respect to the main body part, the other one is moved together with the one by the hinge unit. As the case may be, the first and second engagement members may directly be connected with their corresponding cover parts without through the first and second guide frames.

### ADVANTAGEOUS EFFECTS

According to the personal portable device of the present invention, it is possible to save the manufacturing cost and improve workability and productivity by simplifying a structure and an assembly process of the personal portable device.

In particular, since the first cover part and the second cover part are not operated separately but linked to each other by the hinge unit, the structure of the personal portable device can be simplified, and workability and productivity can be improved.

Also, since each cover part is semi-automatically moved with respect to the main body part, a user can use the device more conveniently.

Also, it is possible to provide convenience in input manipulation of various signals related to various additional functions such as game functions. Moreover, it is possible to improve a grip feeling of the device.

Also, a key pad or additional unit can be mounted on the main body part without spatial restriction, and good appearance of the device can be designed without deterioration in natural design characteristics, whereby high quality of the device can be obtained and consumers' various needs can be satisfied.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 and FIG. 2 are perspective views illustrating a structure of a personal portable device according to the present invention;
FIG. 3 is an exploded perspective view illustrating a structure of a personal portable device according to the present invention;
FIG. 4 is a perspective view illustrating a structure of a hinge unit of a personal portable device according to the present invention;
FIG. 5 is a sectional view taken along line I-I of FIG. 1;
FIG. 6 and FIG. 7 are views illustrating an operation structure of a personal portable device according to the present invention;
FIG. 8 and FIG. 9 are a perspective view and an exploded perspective view illustrating a structure of a personal portable device according to another embodiment of the present invention; and
FIG. 10 and FIG. 11 are views illustrating an operation structure of a personal portable device according to another embodiment of the present invention.

### BEST MODE FOR CARRYING OUT THE INVENTION

Reference will now be made in detail to the preferred embodiments of the present invention, examples of which are illustrated in the accompanying drawings. It is to be understood that the present invention is not limited by the embodiment only. Wherever possible, the same reference numbers will be used throughout the drawings to refer to the same or like parts. Under this rule, reference may be made referring to examples illustrated in other drawings, and description apparent to those skilled in the art or repeated parts will be omitted.

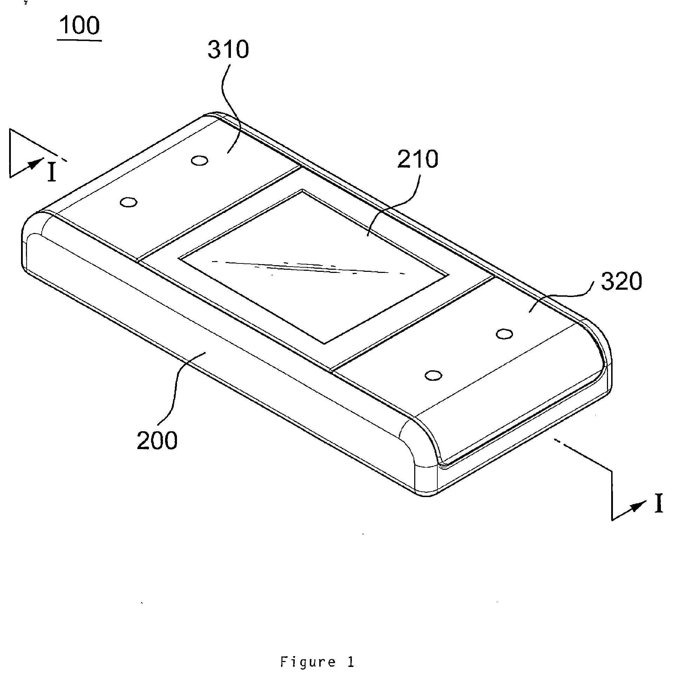

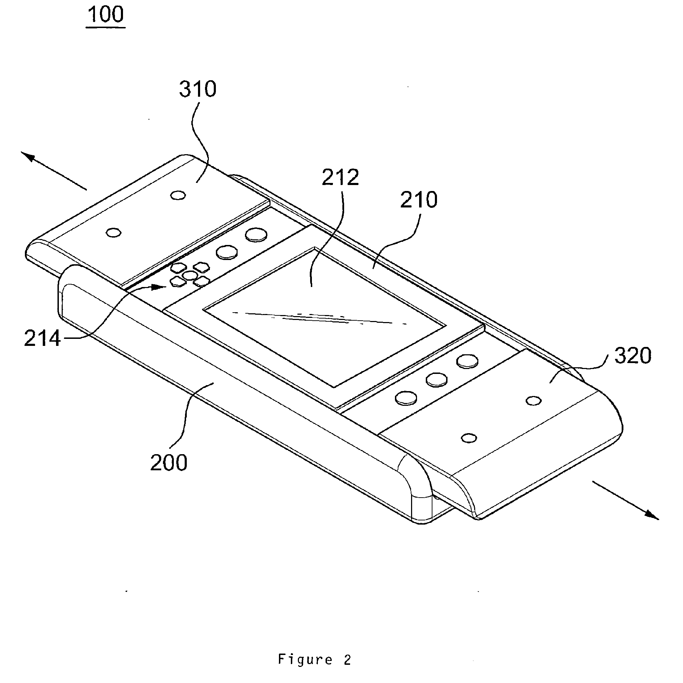

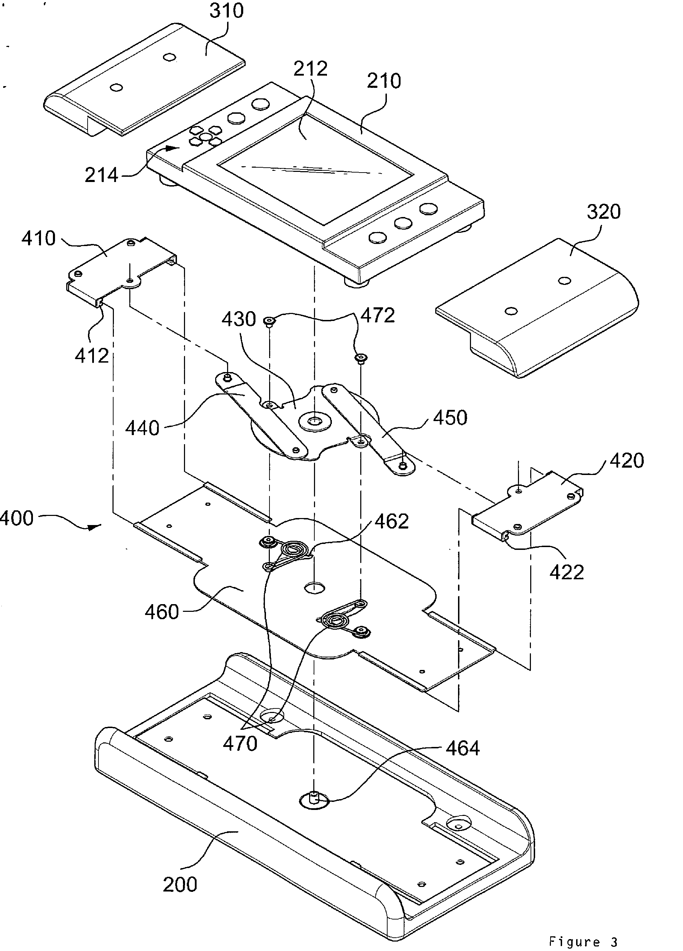

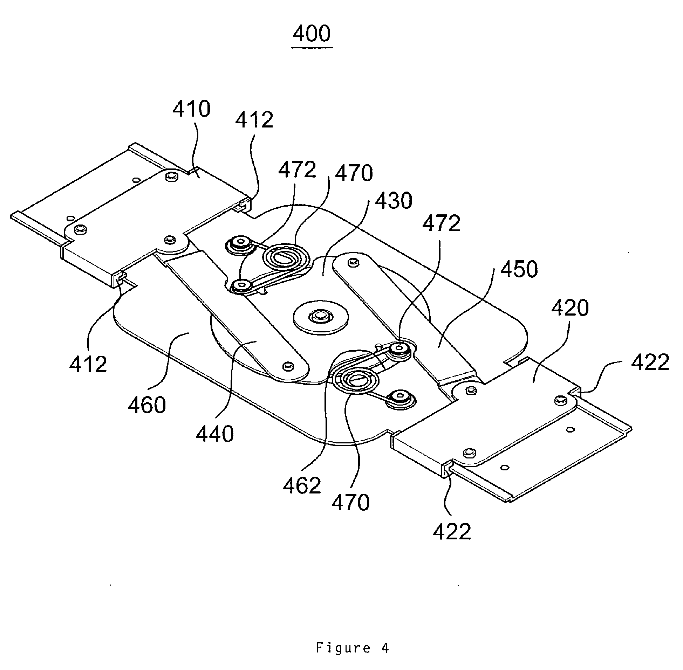

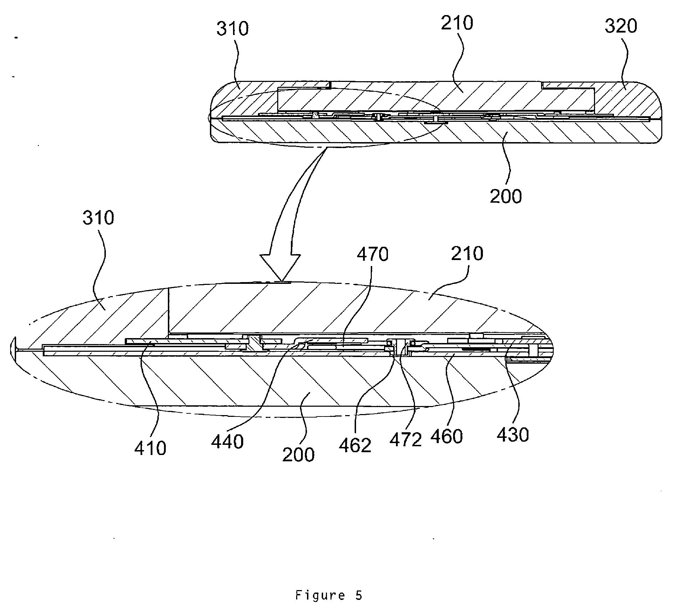

FIG. 1 and FIG. 2 are perspective views illustrating a structure of a personal portable device according to the present invention, and FIG. 3 is an exploded perspective view illustrating a structure of a personal portable device according to the present invention. Also, FIG. 4 is a perspective view illustrating a structure of a hinge unit of a personal portable device according to the present invention, and FIG. 5 is a sectional view taken along line I-I of FIG. 1.

As shown in these drawings, a personal portable device 100 according to the present invention includes a main body part 200, a first cover part 310, a second cover part 320, and a hinge unit 400.

The main body part 200 includes a main body of a portable electronic device such as a personal digital assistant (PDA), a smart phone, a handheld PC, a cellular phone, and MP3 player. The main body part 200 is provided with a conventional communication module such as a code division multiplexing access (CDMA) module, a Bluetooth module, an infrared ray data association (IrDA) module, and a wire and wireless LAN card. A predetermined microprocessor that performs a multimedia play function may be provided in the main body part 200 such that it may be used as a main body having predetermined operation capability. For example, a front surface 210 of the main body part 200 may be provided with a display portion 212 such as LCD for outputting image information and a key pad (not shown) that includes a key or button for inputting various kinds of information.

The first cover part 310 is coupled to the main body part 200 such that it is selectively moved to a position (hereinafter, referred to as 'overlap position') where it is overlapped with the main body 200 and a position (hereinafter, referred to as 'extension position') where it is extended to the outside of the main body part 200. Also, like or similarly to the first cover part 310, the second cover part 320 is coupled to the main body part 200 such that it is moved to an overlap position with the main body part 200 and an extension position to the outside of the main body part 200.

The movement of the first cover part 310 and the second cover part 320 to the overlap position or the extension position with respect to the main body part 200 can be implemented in various manners depending on requirements and design options. For example, the first cover part 310 and the second cover part 320 can be slid with respect to the main body part 200 to move to the overlap position or the extension position. As the case may be, the first cover part and the second cover part may be rotated with respect to the main body part to move to the overlap position or the extension position. Hereinafter, the example of the first cover part 310 and the second cover part 320 coupled to the main body part 200 by sliding movement will be described.

Also, the arrangement position of the first cover part 310 and the second cover part 320 can be varied in various manners depending on requirements and design options. For example, the first cover part 310 and the second cover part 320 can be provided at both ends of the main body part 200 along a longitudinal direction of the main body part 200 by interposing the display portion 212 therebetween. The first cover part 310 and the second cover part 320 provided at both ends of the main body part 200 are approached to each other and spaced apart from each other along the longitudinal direction of the main body part 200. Also, the first cover part 310 and the second cover part 320 can be moved to the overlap position or the extension position.

In the mean time, as the first cover part 310 and the second cover part 320 are moved to the extension position, various additional units or a key or button for inputting information may be provided on an upper surface of the main body part 200 exposed to the outside. For example, when the first cover part 310 and the second cover part 320 are moved to the extension position, the exposed surface of the main body part 200 may be provided with a key pad 214 for inputting a signal related to games and various functions.

In the aforementioned embodiment of the present invention as shown, although the main body part 200 are provided with two cover parts, three or more cover parts may be provided as the case may be, wherein the respective cover parts are configured to move to the overlap position or the extension position in different directions.

The hinge unit 400 has one side connected with the first cover part 310 and the other side connected with the second cover part 320. When any one of the first cover part 310 and the second cover part 320 is moved to the overlap position or the extension position with respect to the main body part 200, the hinge unit 400 allows the other one to be moved together with the one.

The structure and the mode of the aforementioned hinge unit 400 can be varied in various manners depending on requirements and design options. Hereinafter, an example of the first cover part 310 and the second cover part 320 which are linked to each other by the hinge unit 400 in accordance with a link connection mode will be described.

For example, the hinge unit 400 includes a base frame 460, a first guide frame 410, a second guide frame 420, a disc member 430, a first link member 440, and a second link member 450. The first guide frame 410, the second guide frame 420, the disc member 430, the first link member 440, and the second link member 450 are arranged and assembled on the base frame 460 and preferably modularized together with the base frame in a single body.

The base frame 460 has a plate shape having a predetermined thickness and can be fixed to the inner bottom of the main body part 200. A structure and a shape of the base frame 460 can be varied in various manners depending on requirements.

The first guide frame 410 is slidably mounted onto one end of the base frame 460, and its upper portion can be secured into the first cover part 310 by bolts or other securing methods to form a single body.

The second guide frame 420 is slidably mounted onto one end of the base frame 460, and its upper portion can be secured into the second cover part 320 by bolts or other securing methods to form a single body.

The sliding connection structure between the first guide frame 410 and the base frame 460 and the sliding connection structure between the second guide frame 420 and the base frame 460 can be made by a conventional sliding mode depending on requirements and design options. For example, the hinge unit 400 may include slide guides 412 and 422 formed in the first guide frame 410 and the second guide frame 420 in a single body to partially receive a side end portion based on a longitudinal direction of the base frame 460.

The slide guides 412 and 422 are formed by insert injection molding together with the first guide frame 410 and the second guide frame 420, whereby they can be formed in the respective guide frames in a single body. As the case may be, the slide guides 412 and 422 may be formed on each guide frame in a single body by another method other than the insert injection molding. For example, the slide guides may be fixed to each guide frame in a single body by a conventional securing or adhesive method after they are being manufactured separately.

In this case, the slid guides 412 and 422 formed in the first guide frame 410 and the second guide frame 420 in a single body may be formed of a conventional plastic material. However, since the slide guides 412 and 422 need excellent mechanical, thermal and chemical characteristics even at a broad temperature range for a long time and excellent dimensional stability, they are preferably formed of a lubricative material having excellent self-lubrication and excellent fatigue characteristics such as polyoxymethylene, polyamide and polyamide imide.

The disc member 430 has a circular plate shape having a predetermined diameter, and is arranged rotatably at the center of the base frame 460 such that it is arranged horizontally between the first guide frame 410 and the second guide frame 420. Coupling between the disc member 430 and the base frame 460 can be implemented through a conventional rotational pin 464.

The first link member 440 has a bar shape having a predetermined length. One end of the first link member 440 is rotatably connected to the disc member 430, and the other end thereof is rotatably connected to the first guide frame 410.

The second link member 450 has a bar shape having a predetermined length. One end of the second link member 450 is rotatably connected to the disc member 430, and the other end thereof is rotatably connected to the first guide frame 410, wherein the second link member 450 faces the first link member 440.

Preferably, the connection points of the first link member 440 and the second link member 450 to the disc member 430 are arranged on the same circumference based on the rotation center of the disc member 430. Connection between each link member and the disc member 430 and coupling between each link member and each guide frame can be made through a conventional link pin (not shown). In this case, it is to be understood that the present invention is not limited or restricted by the aforementioned connection structure and mode.

According to the embodiment of the present invention, although each of the link members is connected to the first guide frame 410 and the second guide frame 420, respectively, two or more link members may be connected to each guide frame as the case may be.

Although each part constituting the aforementioned hinge unit 400 may be formed of a conventional plastic material, it is preferable that each part is formed of a metal material that can be manufactured at a thinner thickness with maintaining predetermined shape strength.

As the disc member 430 is rotated in accordance with the aforementioned structure, the first guide frame 410 and the second guide frame 420 connected to the first link member 440 and the second link member 450 by the disc member 430 can be slid together on the base frame 460. As a result, the first cover part 310 and the second cover part 320 secured into the first guide frame 410 and the second guide frame 420, respectively, can be slid with respect to the main body part 200.

This means that, when the first cover part 310 and the second cover part 320 are moved to the overlap position or the extension position with respect to the main body part 200, even though any one of the first cover part 310 and the second cover part 320 is manipulated, the other one of the first cover part 310 and the second cover part 320 can be moved together without separate manipulation.

In the mean time, the hinge unit 400 may include at least one elastic member 470 that elastically supports rotation of the disc member 430 with respect to the main body part 200.

For example, one end of the elastic member 470 is pivot-rotatably connected to the base frame 460, and the other end thereof is pivot-rotatably connected to the disc member 430. Then, the elastic member 470 keeps an elastic force during initial rotation of the disc member 430. If the disc member 430 is rotated at a threshold point or more of the elastic member 470, the elastic member 470 is restored to its original position, and the disc member 430 can be rotated automatically by the restoring force after the threshold point. As the case may be, the one end of the elastic member may pivot-rotatably be connected to the base frame 460, and the other end of the elastic member may pivot-rotatably be connected to the first guide frame 410 and/or the second guide frame 420. Alternatively, the other end of the elastic member may be connected to the link member or other member. A conventional torsion spring may be used as the elastic member 470. Various spring members can be used depending on requirements and design options.

Also, a guide slot 462 may be formed in the base frame 460 at a predetermined length along a rotation direction of the disc member 430 such that elastic rotation of the disc member 430 through the elastic member 470 may be made more stably. The hinge unit 400 may include a coupling pin 472 that pivot-rotatably couples the one end of the elastic member 470 to the disc member 430 and is received in the guide slot 462 to move along the guide slot 462.

In this structure, the coupling pin 472 can be moved within the guide slot 462 only formed in the base frame 460 along the guide slot 462. As a result, this structure restricts rotation of the disc member 430 for a predetermined period.

Although two elastic members 470 are used in the embodiment of the present invention, one elastic member or three or more elastic members may be used as the case may be. It is to be understood that the present invention is not restricted or limited by the number or position of elastic members 470.

In the mean time, in the aforementioned embodiment of the present invention as shown, the first guide frame 410, the second guide frame 420, the disc member 430, the first link member 440, and the second link member 450, which constitute the hinge unit 400, are arranged and assembled on the base frame 460 and modularized together with the base frame 460. However, as the case may be, the parts constituting the hinge unit excluding the base frame may be arranged and assembled separately on the main body part.

Also, in the aforementioned embodiment of the present invention as shown, the first and second link members are connected to the first and second cover parts through the first and second guide frames. However, each link member may directly be connected to each cover part without through each guide frame, as the case may be.

Hereinafter, an operation structure of the personal portable device according to the present invention will be described.

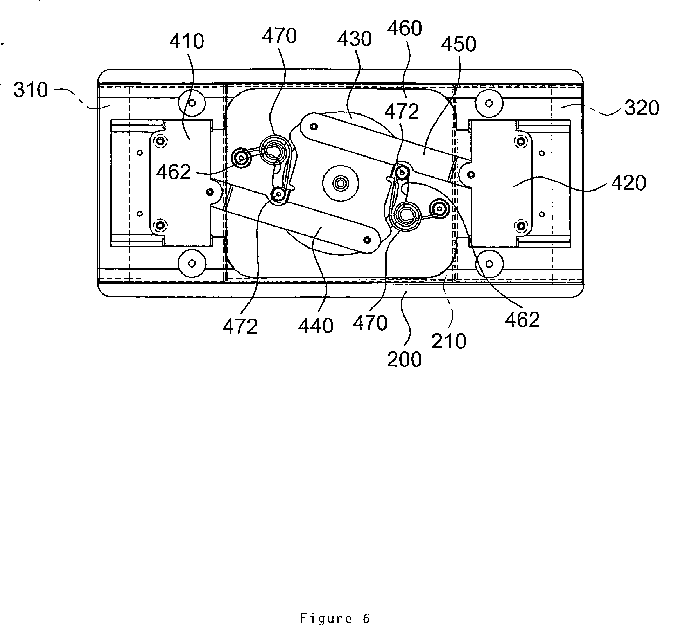

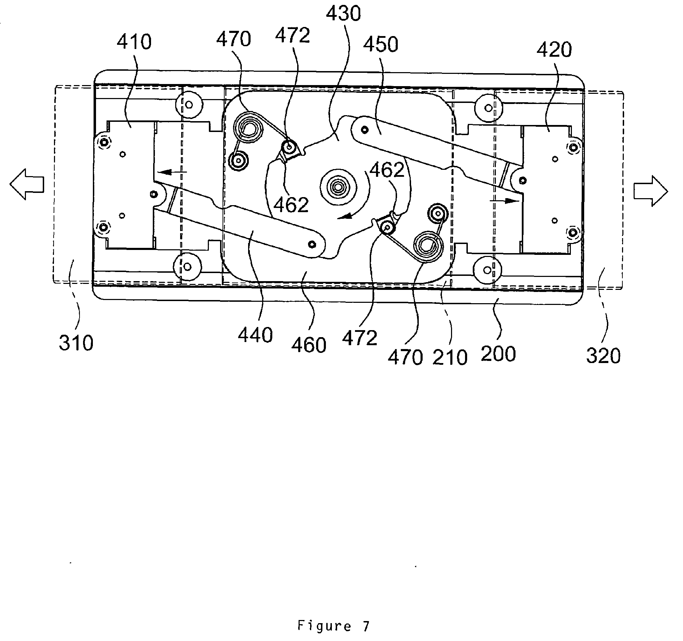

FIG. 6 and FIG. 7 are views illustrating an operation structure of a personal portable device according to the present invention. With respect to the same or like parts of those of the aforementioned structure, the same reference numbers will be used throughout the drawings to refer to the same or like parts, and their detailed description will be omitted.

As shown in FIG. 6, the personal portable device is initially provided in such a way that the first cover part 310 and the second cover part 320 are arranged to overlap the main body part 200. At this time, since the aforementioned disc member 430 is elastically supported by the elastic member 470, it can be prevented from being rotated abnormally by unexpected external impact. As a result, this could allow stable arrangement of the first cover part 310 and the second cover part 320, which are arranged to overlap the main body part 200.

If the user manipulates any one of the first cover part 310 and the second cover part 320 to move the corresponding one to the extension position as shown in FIG. 7 to use various additional units provided on an upper exposed surface of the main body part 200 and a key pad (see 214 of FIG. 3) for inputting information (hereinafter, an manipulation example of the first cover part 310 will be described), the first guide frame 410 coupled to the first cover part 310 is slid with respect to the base frame 460 and the disc member 430 is rotated through the first link member 440. As the disc member 430 is rotated, the second guide frame 420 can be slid at the other side of the base frame 460 through the second link member 450. As a result, the second cover part 320 coupled to the second guide frame 420 is moved to the extension position together with the first cover part 310, and the key pad 214 can be exposed externally.

Moreover, when the disc member 430 is rotated by manipulation of the first cover part 310 as above, the elastic member 470 is compressed to keep the elastic force during initial rotation of the disc member 430. If rotation of the disc member 430 reaches a threshold point or more of the elastic member 470, the compressed elastic member 470 is restored, whereby remaining rotation of the disc member 430 is automatically carried out by the elastic force of the elastic member.

On the other hand, after various additional units or the key pad 214 is used, any one of the first cover part 310 and the second cover part 320 is manipulated to move to the overlap position in an opposite direction of an open state of the cover part. The other one of the first cover part 310 and the second cover part 320 can be moved to the overlap position together with the one. Also, close manipulation to the overlap position of the first cover part 310 and the second cover part 320 can be carried out semi-automatically by the elastic member 470.

As described above, according to the present invention, if any one of the first cover part 310 and the second cover part 320 is manipulated without separate manipulation, the other one is manipulated together to close and open, whereby the structure can be simplified and convenience in open and close manipulation can be improved. Moreover, since the first cover part 310 and the second cover part 320 can be closed and opened semi-automatically, they can be closed and opened more conveniently. Since the open state (extension position) or close state (overlap position) of the first cover part 310 and the second cover part 320 can be supported elastically by the elastic member 470, the first cover part 310 and the second cover part 320 can be prevented from being abnormally closed and opened by unexpected external impact.

In the mean time, although the first cover part and the second cover part are linked to each other by the hinge unit in accordance with a link connection mode in the aforementioned embodiment of the present invention as shown, they may be linked to each other by the hinge unit in a gear engagement mode as the case may be.

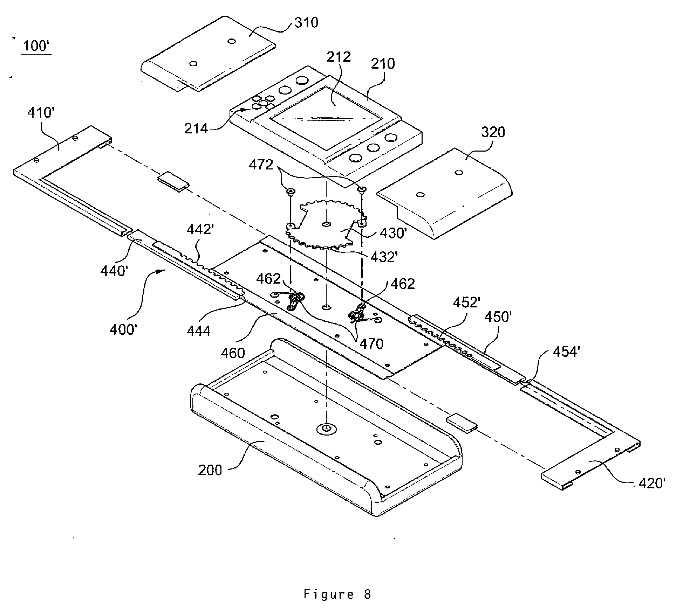

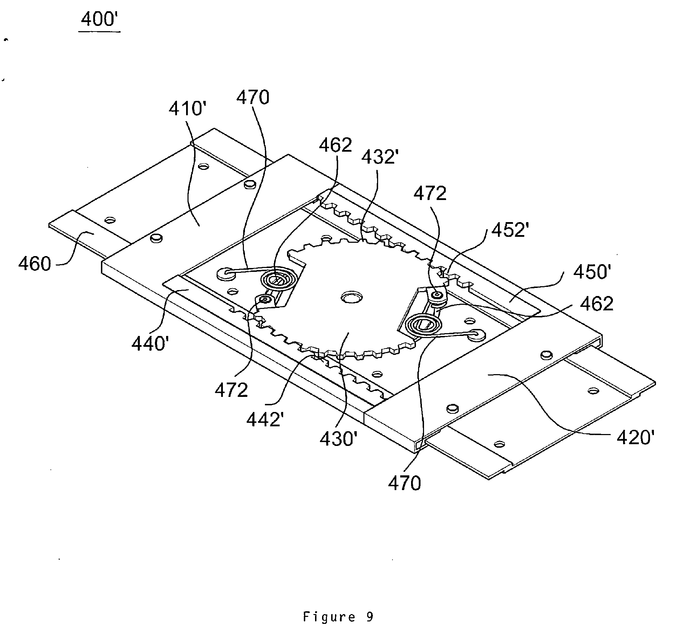

Hereinafter, the personal portable device according to another embodiment of the present invention will be described. FIG. 8 and FIG. 9 are a perspective view and an exploded perspective view illustrating a structure of a personal portable device according to another embodiment of the present invention. Also, with respect to the same or like parts of those of the aforementioned structure, the same reference numbers will be used throughout the drawings to refer to the same or like parts, and their detailed description will be omitted.

As shown in FIG. 8 and FIG. 9, a personal portable device 100' according to another embodiment of the present invention includes a main body part 200, a first cover part 310, a second cover part 320, and a hinge unit 400'. The hinge unit 400' includes a base frame 460, a first guide frame 410', a second guide frame 420', a disc member 430', a first engagement member 440' and a second engagement member 450'.

A front surface 210 of the main body part 200 may be provided with a display portion 212 such as LCD for outputting image information and a key pad (not shown) that includes a key or button for inputting various kinds of information.

The first cover part 310 is coupled to the main body part 200 such that it is selectively moved to a position (hereinafter, referred to as 'overlap position') where it is overlapped with the main body 200 and a position (hereinafter, referred to as 'extension position') where it is extended to the outside of the main body part. Also, like or similarly to the first cover part 310, the second cover part 320 is coupled to the main body part 200 such that it is moved to an overlap position with the main body part 200 and an extension position to the outside of the main body part 200.

The movement of the first cover part 310 and the second cover part 320 to the overlap position or the extension position with respect to the main body part 200 can be implemented in various manners depending on requirements and design options. Hereinafter, the example of the first cover part 310 and the second cover part 320 coupled to the main body part 200 by sliding movement will be described.

Also, the arrangement position of the first cover part 310 and the second cover part 320 can be varied in various manners depending on requirements and design options. For example, the first cover part 310 and the second cover part 320 can be provided at both ends of the main body part 200 by interposing the display portion 212 therebetween along a longitudinal direction of the main body part 200. The first cover part 310 and the second cover part 320 provided at both ends of the main body part 200 are approached to each other and spaced apart from each other along a longitudinal direction of the main body part 200. Also, the first cover part 310 and the second cover part 320 can be moved to the overlap position or the extension position.

In the mean time, as the first cover part 310 and the second cover part 320 are moved to the extension position, various additional units or a key or button for inputting information may be provided on an upper surface of the main body part 200 exposed to the outside. For example, when the first cover part 310 and the second cover part 320 are moved to the extension position, the exposed surface of the main body part 200 may be provided with a key pad 214 for inputting a signal related to games and various functions.

In the aforementioned embodiment of the present invention as shown, although the main body part 200 are provided with two cover parts, three or more cover parts may be provided as the case may be, wherein the respective cover parts are configured to move to the overlap position or the extension position in different directions.

The hinge unit 400 has one side connected with the first cover part 310 and the other side connected with the second cover part 320. When any one of the first cover part 310 and the second cover part 320 is moved to the overlap position or the extension position with respect to the main body part 200, the hinge unit 400 allows the other one to be moved together with the one.

That is, the hinge unit 400 includes a base frame 460, a first guide frame 410', a second guide frame 420', a disc member 430', a first engagement member 440', and a second engagement member 450'. The first guide frame 410', the second guide frame 420', the disc member 430', the first engagement member 440', and the second engagement member 450' are arranged and assembled on the base frame 460 and preferably modularized together with the base frame 460 in a single body.

The base frame 460 has a plate shape having a predetermined thickness and can be fixed to the inner bottom of the main body part 200. A structure and shape of the base frame 460 can be varied in various manners depending on requirements.

The first guide frame 410' is slidably mounted onto one end of the base frame 460, and its upper portion can be secured into the first cover part 310 by bolts or other securing methods in a single body.

The second guide frame 420 is slidably mounted onto one end of the base frame 460, and its upper portion can be secured into the second cover part 320 by bolts or other securing methods in a single body.

The sliding connection structure between the first guide frame 410' and the base frame 460 and the sliding connection structure between the second guide frame 420' and the base frame 460 can be made by a conventional sliding system depending on requirements and design options.

The disc member 430' has a circular plate shape having a predetermined diameter, and is surrounded with a tooth profile 432'. The disc member 430' is rotatably provided at the center of the base frame 460 such that it is horizontally arranged between the first guide frame 410' and the second guide frame 420'. Coupling between the disc member 430' and the base frame 460 can be implemented through a conventional rotational pin (not shown). Although the tooth profile 432' is partially formed around the disc member 430' in the embodiment of the present invention, it may fully be formed around the disc member 430' as the case may be.

The first engagement member 440' has a bar shape having a predetermined length, and is movably coupled to the first guide frame 410' to form a singe body. The first engagement member 440' is provided with a first rack gear 442' on an inner wall along a longitudinal direction and engaged with the tooth profile 432' of the disc member 430'.

In this embodiment, the first engagement member 440' and the first guide frame 410' are coupled to each other in an "L" shape approximately. However, the coupling shape between the first engagement member 440' and the first guide frame 410' may be varied in various manners depending on requirements and design options.

Also, a coupling mode of the first engagement member 440' and the first guide frame 410' may be varied in various manners depending on requirements. For example, an extension (not shown) having an insertion hole (not shown) may be formed at one side of the first guide frame 410' in a single body with the first guide frame 410'. The first engagement member 440' may be inserted into the insertion hole of the extension by tight fitting, whereby it can be coupled to the first guide frame 410' in a single body. As the case may be, the first engagement member may be coupled to the first guide frame in a single body by a conventional securing or adhesive method.

In the aforementioned embodiment of the present invention as shown, the first engagement member 440' having the first rack gear 442' is manufactured separately from the first guide frame 410' and then coupled to the first guide frame 410'. However, one side of the first guide frame may be extended to have a rack gear and then may serve as the first engagement member. In this case, the first engagement member and the first guide frame may be regarded as one part not separate parts.

The second engagement member 450' has a bar shape having a predetermined length, and is movably coupled to the second guide frame 420' in a single body to face the first engagement member 440'. The second engagement member 450' is provided with a second rack gear 452' formed on an inner wall along a longitudinal direction and engaged with another side of the tooth profile 432' of the disc member 430'.

In this embodiment, the second engagement member 450' and the second guide frame 420' are coupled to each other in an "L" shape approximately. However, the coupling shape between the second engagement member 450' and the second guide frame 420' may be varied in various manners depending on requirements and design options.

Also, a coupling mode of the second engagement member 450' and the second guide frame 420' may be varied in various manners depending on requirements. For example, an extension (not shown) having an insertion hole (not shown) may be formed at one side of the second guide frame 420' in a single body with the second guide frame 420'. The second engagement member 450' may be inserted into the insertion hole of the extension by tight fitting, whereby it can be coupled to the second guide frame 420' in a single body. As the case may be, the second engagement member may be coupled to the second guide frame in a single body by a conventional securing or adhesive method.

In the aforementioned embodiment of the present invention as shown, the second engagement member 450' having the second rack gear 452' is manufactured separately from the second guide frame 420' and then coupled to the second guide frame 420'. However, one side of the second guide frame may be extended to have a rack gear and then may serve as the second engagement member. In this case, the second engagement member and the second guide frame may be regarded as one part not separate parts.

Also, guide grooves 444' and 454' for partially receiving one longitudinal side end of the base frame 460 may be formed on inner walls of the first engagement member 440' and the second engagement member 450', respectively. The first engagement member 440' and the second engagement member 450' may be slid along the longitudinal side end of the base frame 460 in a state that they partially receive the longitudinal side end of the base frame 460.

In the embodiment of the present invention, the base frame 460 is coupled to the first guide frame 410' and the second guide frame 420' through the first engagement member 440' and the second engagement member 450' provided with the guide grooves 444' and 454' on the inner walls to enable relative sliding. However, regardless of the first engagement member and the second engagement member, the first guide frame and the second guide frame may be coupled to the base frame to enable sliding.

Furthermore, a slide guide (not shown) having guide grooves (not shown) the same as or similar to the aforementioned guide grooves 444' and 454' may be provided at the other sides of the first guide frame 410' and the second guide frame 420' in a single body. In a state that the slide guide partially receives the other longitudinal side end of the base frame, it may be slid along the other longitudinal side end of the base frame.

The first engagement member 440, the second engagement member 450' and the slide guide may be formed of a conventional plastic material. However, since they need excellent mechanical, thermal and chemical characteristics even at a broad temperature range for a long time and excellent dimensional stability, they are preferably formed of a lubricative material having excellent self-lubrication and excellent fatigue characteristics such as polyoxymethylene, polyamide and polyamide imide.

Although each part constituting the aforementioned hinge unit 400' may be formed of a conventional plastic material, it is preferable that each part is formed of a metal material that can be manufactured at a thinner thickness with maintaining predetermined shape strength.

As the disc member 430' is rotated in accordance with the aforementioned structure, the first guide frame 410' and the second guide frame 420' can be moved together through the first engagement member 440' and the second engagement member 450' engaged with the disc member 430' and can be slid on the base frame 460. As a result, the first cover part 310 and the second cover part 320 secured into the first guide frame 410' and the second guide frame 420', respectively, can be slid with respect to the main body part 200.

This means that, when the first cover part 310 and the second cover part 320 are moved to the overlap position or the extension position with respect to the main body part 200, even though any one of the first cover part 310 and the second cover part 320 is manipulated, the other one of the first cover part 310 and the second cover part 320 can be moved together without separate manipulation.

In the mean time, the hinge unit 400' may include at least one elastic member 470 that elastically supports rotation of the disc member 430' with respect to the main body part 200.

For example, one end of the elastic member 470 is pivot-rotatably connected to the base frame 460, and the other end thereof is pivot-rotatably connected to the disc member 430'. Then, the elastic member 470 keeps an elastic force during initial rotation of the disc member 430'. If the disc member 430' is rotated at a threshold point or more of the elastic member 470, the elastic member 470 is restored to its original position, and the disc member 430' can be rotated automatically by the restoring force after the threshold point. As the case may be, one end of the elastic member may pivot-rotatably be connected to the base frame 460, and the other end of the elastic member may pivot--rotatably be connected to the first guide frame 410' and/or the second guide frame 420'. Alternatively, the other end of the elastic member may be connected to the engagement member or other member. A conventional torsion spring may be used as the elastic member 470. Various spring members can be used depending on requirements and design options.

Also, a guide slot 462 may be formed in the base frame 460 at a predetermined length along a rotation direction of the disc member 430' such that elastic rotation of the disc member 430' through the elastic member 470 may be made more stably. The hinge unit 400' may include a coupling pin 472 that pivot-rotatably couples one end of the elastic member 470 to the disc member 430' and is received in the guide slot 462 to move along the guide slot 462.

In this structure, the coupling pin 472 can be moved within the guide slot 462 only formed in the base frame 460 along the guide slot 462. As a result, this structure restricts rotation of the disc member 430'.

Although two elastic members 470 are used in the embodiment of the present invention, one elastic member or three or more elastic members may be used as the case may be. It is to be understood that the present invention is not restricted or limited by the number or position of elastic members 470.

In the mean time, in the aforementioned embodiment of the present invention as shown, the first guide frame 410', the second guide frame 420', the disc member 430', the first engagement member 440', and the second engagement member 450', which constitute the hinge unit 400', are arranged and assembled on the base frame 460 and modularized together with the base frame 460. However, as the case may be, the parts constituting the hinge unit excluding the base frame may be arranged and assembled separately on the main body part.

Also, in the aforementioned embodiment of the present invention as shown, the first and second engagement members are connected to the first and second cover parts through the first and second guide frames. However, each engagement member may directly be connected to each cover part without through each guide frame, as the case may be.

Hereinafter, an operation structure of the personal portable device according to another embodiment the present invention will be described.

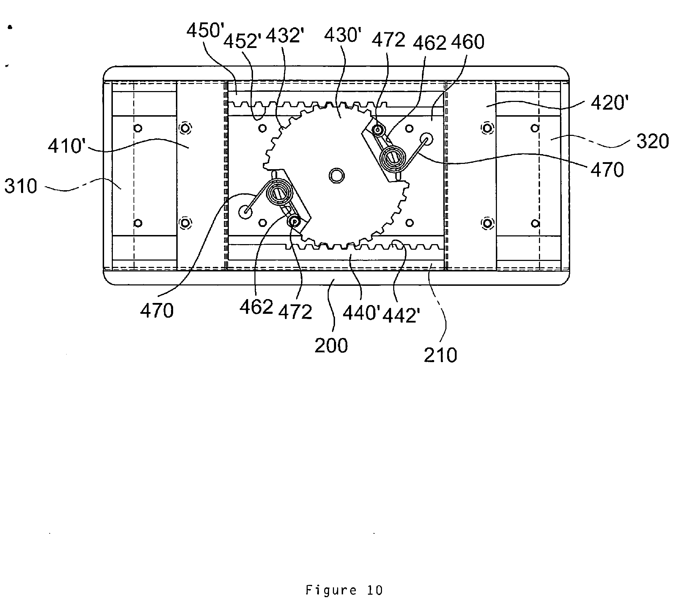

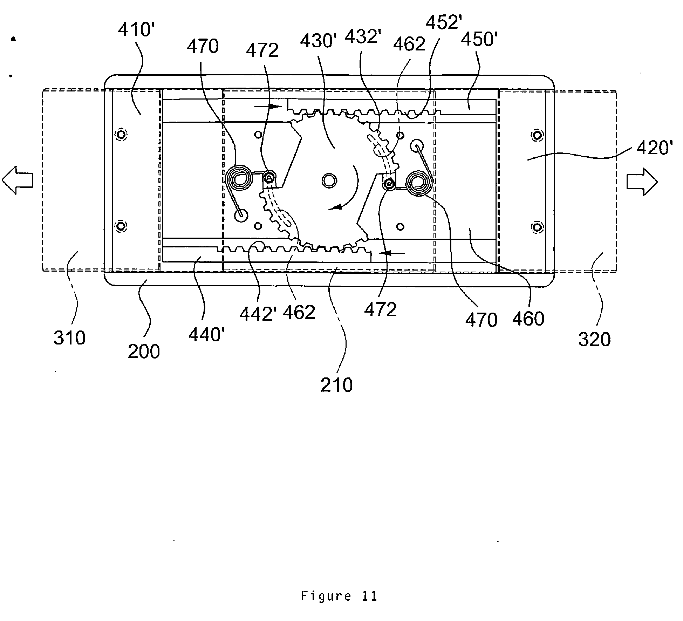

FIG. 10 and FIG. 11 are views illustrating an operation structure of a personal portable device according to another embodiment of the present invention. With respect to the same or like parts of those of the aforementioned structure, the same reference numbers will be used throughout the drawings to refer to the same or like parts, and their detailed description will be omitted.

As shown in FIG. 10, the personal portable device 100' is initially provided in such a way that the first cover part 310 and the second cover part 320 are arranged to overlap the main body part 200. At this time, since the aforementioned disc member 430' is elastically supported by the elastic member 470, it can be prevented from being rotated abnormally by unexpected external impact. As a result, this could allow stable arrangement of the first cover part 310 and the second cover part 320, which are arranged to overlap the main body part 200.

If the user manipulates any one of the first cover part 310 and the second cover part 320 to move the corresponding one to the extension position as shown in FIG. 11 to use various additional units provided on an upper exposed surface of the main body part 200 and a key pad (see 214 of FIG. 8) for inputting information (hereinafter, an manipulation example of the first cover part 310 will be described), the first guide frame 410' coupled to the first cover part 310 is slid with respect to the base frame 460 and the disc member 430' is rotated through the first engagement member 440'. As the disc member 430' is rotated, the second guide frame 420' can be slid at the other side of the base frame 460 through the second engagement member 450'. As a result, the second cover part 320 coupled to the second guide frame 420 is moved to the extension position together with the first cover part 310, and the key pad 214 can be exposed externally.

Moreover, when the disc member 430' is rotated by manipulation of the first cover part 310 as above, the elastic member 470 is compressed to keep the elastic force during initial rotation of the disc member 430'. If rotation of the disc member 430' reaches a threshold point or more of the elastic member 470, the compressed elastic member 470 is restored, whereby remaining rotation of the disc member 430' is automatically carried out by the elastic force of the elastic member.

On the other hand, after various additional units or the key pad 214 is used, any one of the first cover part 310 and the second cover part 320 is manipulated to move to the overlap position in an opposite direction when the cover part is opened. The other one of the first cover part 310 and the second cover part 320 can be moved to the overlap position together with the one. Also, close manipulation to the overlap position of the first cover part 310 and the second cover part 320 can be carried out semi-automatically by the elastic member 470.

It will be apparent to those skilled in the art that the present invention can be embodied in other specific forms without departing from the spirit and essential characteristics of the invention. Thus, the above embodiments are to be considered in all respects as illustrative and not restrictive. The scope of the invention should be determined by reasonable interpretation of the appended claims and all change which comes within the equivalent scope of the invention are included in the scope of the invention.

### INDUSTRIAL APPLICABILITY

The personal portable device according to the present invention can widely be used as a portable electronic device such as a personal digital assistant (PDA), a smart phone, a handheld PC, a cellular phone, MP3 player, and a game player.

## Claims

1. A personal portable device comprising a main body part including a display portion, a first cover part coupled to the main body part such that it is moved to an overlap position with the main body part and an extension position to the outside of the main body part, and a second cover part coupled to the main body part such that it is moved to an overlap position with the main body part and an extension position to the outside of the main body part, the personal portable device comprising:
a hinge unit having one side connected to the first cover part and the other side connected to the second cover part, when any one of the first cover part and the second cover part is moved with respect to the main body part, moving the other one together with the one.

2. The personal portable device of claim 1, wherein, when the first cover part and the second cover part are moved to the extension position to the outside of the main body part, a key pad is provided on an exposed surface exposed on the main body part.

3. The personal portable device of claim 1, wherein the hinge unit includes a disc member rotatably mounted on the main body part, a first link member having one end rotatably connected to the disc member and the other end rotatably connected to the first cover part, and a second link member having one end rotatably connected to the disc member to face the first link member and the other end rotatably connected to the second cover part.

4. The personal portable device of claim 1, wherein the hinge unit includes a disc member rotatably mounted on the main body part and surrounded with a tooth profile, a first engagement member engaged with the tooth profile and moved together with the first cover part, and a second engagement member engaged with the tooth profile opposite to face the first engagement member and moved together with the second cover part.

5. The personal portable device of claim 1, wherein the hinge unit further includes at least one elastic member that elastically supports movement of the first cover part and the second cover part with respect to the main body part.

6. The personal portable device of claim 1, wherein the first cover part and the second cover part are coupled to the main body part such that they may be slid or rotatably moved to the overlap position with the main body part and the extension position to the outside of the main body part.

7. The personal portable device of claim 1, wherein the hinge unit includes a first guide frame slidably arranged on the main body part and coupled to the first cover part, a second guide frame slidably arranged on the main body part and coupled to the second cover part, a disc member rotatably coupled to the main body part such that it is arranged between the first guide frame and the second guide frame, a first link member having one end connected to the disc member and the other end connected to the first guide frame, and a second link member having one end connected to the disc member and the other end connected to the second guide frame.

8. The personal portable device of claim 7, wherein the hinge unit further includes a base frame mounted on the main body part, and slide guides formed at both ends of the first guide frame and the second guide frame in a single body to partially receive a side end of the base frame.

9. The personal portable device of claim 8, wherein the hinge unit further includes at least one elastic member that elastically supports rotation of the disc member with respect to the main body part, the elastic member having one end connected to the base frame and the other end connected to the disc member.

10. The personal portable device of claim 9, wherein the base frame is provided with a guide slot at a predetermined length along a rotation direction of the disc member, and the hinge unit includes a coupling pin that couples the one end of the elastic member with the disc member and is movably received in the guide slot.

11. The personal portable device of claim 1, wherein the hinge unit includes a first guide frame slidably arranged on the main body part and coupled to the first cover part, a second guide frame slidably arranged on the main body part and coupled to the second cover part, a disc member rotatably coupled to the main body part such that it is arranged between the first guide frame and the second guide frame, the disc member being surrounded with a tooth profile, a first engagement member having a first rack gear engaged with the tooth profile, coupled to the first guide frame, and a second engagement member having a second rack gear engaged with the tooth profile, coupled to the second guide frame.

12. The personal portable device of claim 11, wherein the hinge unit further includes a base frame mounted on the main body part, and each of the first engagement member and the second engagement member is provided with a guide groove to partially receive a side end of the base frame.

13. The personal portable device of claim 12, wherein the hinge unit further includes at least one elastic member that elastically supports rotation of the disc member with respect to the main body part, the elastic member having one end connected to the base frame and the other end connected to the disc member.

14. The personal portable device of claim 13, wherein the base frame is provided with a guide slot at a predetermined length along a rotation direction of the disc member, and the hinge unit includes a coupling pin that couples the one end of the elastic member with the disc member and is movably received in the guide slot.

15. The personal portable device of claim 1, wherein the first cover part and the second cover part are arranged at both sides of a display portion by interposing the display portion therebetween.
